# EUROPÄISCHE PATENTANMELDUNG

(11) **EP 3 689 812 A1**
(43) Veröffentlichungstag der Anmeldung: **05.08.2020**
(21) Anmeldenummer: 20152709.0
(22) Anmeldetag: 20.01.2020
(51) Int. Cl.: B66F 9/075, B62D 7/14, B62D 7/15

(54) **FLURFÖRDERZEUG MIT EINEM MEHRRÄDRIGEN FAHRWERK**

(30) Priorität: 29.01.2019 DE 102019102182
(71) Anmelder: Jungheinrich Aktiengesellschaft, 22047 Hamburg (DE)
(72) Erfinder: Schwaiger, Dr. Martin, 82490 Farchant (DE)
(74) Vertreter: Hauck Patentanwaltspartnerschaft mbB

(57) **Zusammenfassung**

Flurförderzeug, insbesondere ein autonom fahrendes Flurförderzeug, das mit einem mehrrädrigen Fahrwerk ausgestattet ist, das genau ein mit einer Antriebseinheit und einer Lenkeinheit ausgestattetes Antriebsrad und zwei nur mit jeweils einer Lenkeinheit ausgestattete Lasträder aufweist.

## Beschreibung

Die vorliegende Erfindung betrifft ein Flurförderzeug, insbesondere ein autonom fahrendes Flurförderzeug, das mit einem mehrrädrigen Fahrwerk ausgestattet ist. Das mehrrädrige Fahrwerk kann drei oder vier Räder umfassen, es sind auch Fahrwerke mit mehr als vier Rädern möglich.

Aus GB 2 042 217 B ist ein Hubmaststapler bekannt, der ein gelenktes Rad am Lastteil und zwei angetriebene Antriebsräder in den Radarmen aufweist.

Aus WO 03/059799 A1 ist ein Flurförderzeug bekannt geworden, das ein dreirädriges Fahrwerk besitzt, dessen drei Räder angetrieben sind.

Aus DE 42 34 174 A1 ist ein Verfahren zur Lastaufnahme/-abgabe bekannt, bei dem über eine Schrägfahrt Positionsabweichungen zur Last ausgeglichen werden können.

Aus EP 2 944 601 B1 ist ein autonomes fahrerloses Transportfahrzeug mit einem elektrischen Antriebssystem und einem Energiespeicher für das Antriebssystem bekannt geworden. Für den Transport von Lasten ist das Fahrzeug mit einer Hubgabel ausgestattet, wobei das Antriebssystem außerhalb der Hubgabel angeordnet ist. Das Flurförderzeug ist als flachbauendes Fahrzeug ausgebildet, das unter eine aufzunehmende Last fährt. Das Fahrzeug besitzt vier Räder, von denen zwei Radelemente als freibewegliche, nachlaufende Rollen ausgebildet sind. Die beiden anderen Radelemente sind für den Vortrieb des Transportfahrzeugs und für eine aktive Lenkung ausgebildet.

Aus EP 2 336 075 B1 ist eine fahrerlose Transporteinrichtung bekannt geworden, die in den Spitzen der Hubgabel angeordnete Radeinheiten können um eine vertikale Achse gedreht werden und sind durch eine Kopplungseinrichtung miteinander zur Lenkung gekoppelt. Zudem ist für jedes Rad eine eigene Antriebseinheit vorgesehen.

Der Erfindung liegt die Aufgabe zugrunde, ein Flurförderzeug mit einem mehrrädrigen Fahrwerk bereitzustellen, das verbesserte Möglichkeiten zur Steuerung bietet.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug ist mit einem mehrrädrigen Fahrwerk ausgestattet. Das Fahrwerk besitzt genau ein mit einer Antriebseinheit und einer Lenkeinheit ausgestattetes Antriebsrad, das durch seine entsprechenden Einheiten sowohl für einen Vortrieb als auch für eine Lenkung angetrieben wird. Ferner besitzt das Fahrwerk zwei nur mit einer Lenkeinheit ausgestattete Lasträder. Die Lasträder besitzen keine Antriebseinheit, um diese für einen Vortrieb des Fahrzeugs anzutreiben, sondern jeweils eine Lenkeinheit, die die Lasträder aktiv lenkt. Die aktive Lenkung der Lasträder unter Verzicht auf eine Antriebseinheit für diese verbessert die Ausnutzung des Bauraums und reduziert die Kosten der Herstellung für das Flurförderzeug. Insbesondere kann im Zusammenhang mit einer Palettenerkennung eine Korrektur der Fahrzeugposition erfolgen, um so ein zuverlässiges Aufnehmen und Absetzen der Last zu gewährleisten. Auch bewirken die lenkbaren Lasträder eine Verringerung des Anfahrradius für das Flurförderzeug. Auch der Platzbedarf bei der Kurvenfahrt wird verringert. Ein weiterer, ganz besonderer Vorteil besteht darin, dass durch den Verzicht auf eine Antriebseinheit für die Lasträder, Bauraum eingespart wird und für die Lasträder jeweils nur eine Lenkeinheit integriert werden muss.

In einer bevorzugten Weiterbildung sind für das Flurförderzeug ein Antriebsteil und ein Lastteil vorgesehen, wobei das Lastteil ein Lastaufnahmemittel für eine zu befördernde Last besitzt.

In einer weiteren bevorzugten Ausgestaltung können die zwei Lasträder an einem von dem Antriebsteil fortweisenden Ende des Lastteils angeordnet sein, wobei deren Lenkeinheit jeweils unabhängig voneinander angesteuert werden kann. Unabhängige Ansteuerung bedeutet hier, dass keine mechanische oder sonst wie ausgebildete Kopplung bei der Lenkung der Lasträder vorliegt, sondern die unabhängige Ansteuerung erlaubt, dass jedes Lastrad für sich in seinem Lenkwinkel gestellt wird.

In einer bevorzugten Ausgestaltung weist das Lastaufnahmemittel zwei bevorzugt parallel zueinander verlaufende Lastarme auf, die an ihren Enden einen Lastarmkopf mit dem jeweiligen Lastrad aufweisen. Alternativ zu den zwei Lastarmen kann auch ein einarmiges Lastteil vorgesehen sein. In einer möglichen Ausgestaltung besitzt der Lastarmkopf einen runden Abschnitt, der in der Breite seitlich über den Lastarm hinaussteht und in dem zentral eine Lagereinheit mit dem Lastrad angeordnet ist. Auch ist eine Ausgestaltung möglich, in der der Lastarmkopf als ein Hohlprofil insbesondere als ein im Querschnitt rechteckiges Hohlprofil ausgebildet ist. Der Lastarmkopf kann zweckmäßiger Weise in ein Hohlprofil des Lastarms gesteckt und in diesem dann auch gehalten sein. Bevorzugt besitzt die Lagereinheit alle notwendigen Komponenten für das Lastrad, insbesondere auch für dessen Lenkeinheit.

In einer bevorzugten Weiterbildung ist die Lagereinheit drehbar in dem Lastarmkopf angeordnet und die Lenkeinheit dreht aktiv die Lagereinheit mit dem Lastrad in einen gewünschten Lenkwinkel. Je nach Ausgestaltung kann dabei die Lenkeinheit im Lastteil und insbesondere im Lastarm montiert sein, oder die Lenkeinheit ist Bestandteil der Lagereinheit und kann mit dieser gemeinsam montiert werden.

In einer bevorzugten Ausgestaltung weist die Lagereinheit einen umlaufenden Zahnkranz auf, in den die Lenkeinheit eingreift, um den Lenkwinkel des Lastrades zu stellen. Neben der Ausgestaltung mit einem Zahnkranz kann auch ein Zahnriemen oder ein Kettentrieb vorgesehen sein. Ebenfalls ist es möglich allgemein ein Getriebe zu verwenden oder eine Schubstange vorzusehen, durch die eine Lenkbewegung auf die Lageeinheit übertragen wird. Auch ist es möglich, mit Hilfe eines hydraulischen oder elektrischen Zylinders den Lenkwinkel zu stellen.

In einer bevorzugten Ausgestaltung weist jedes der Lasträder einen Sensor auf, der den aktuellen Lenkwinkel des Lastrades erfassen kann. Die Erfassung des Lenkwinkels erfolgt hierbei bevorzugt absolut. Der erfasste Lenkwinkel erlaubt, in einer Lenksteuerung oder in einer sonstigen Fahrzeugsteuerung die Fahrtrichtung des Fahrzeugs besser anzusteuern. Bevorzugt wird von dem Sensor der Lenkwinkel zum Zwecke der Referenzierung erfasst. Um die Lastrollen besser auch auf der Stelle drehen zu können, sind bevorzugt geteilte Lastrollen vorgesehen. Bei geteilten Lastrollen ist besonders bevorzugt, wenn die Teilrollen unabhängig voneinander gelagert sind.

Ein bevorzugtes Ausführungsbeispiel für die Erfindung wird nachfolgend anhand der Figuren näher erläutert. Es zeigen:
- Fig. 1a, b: ein autonom fahrendes Flurförderzeug in einer Ansicht von der Seite und einer Ansicht von oben,
- Fig. 2a-c: unterschiedliche Kombinationen von aktiv gelenkten Lasträdern und
- Fig. 3a-c: den Aufbau eines Lastarmkopfes.

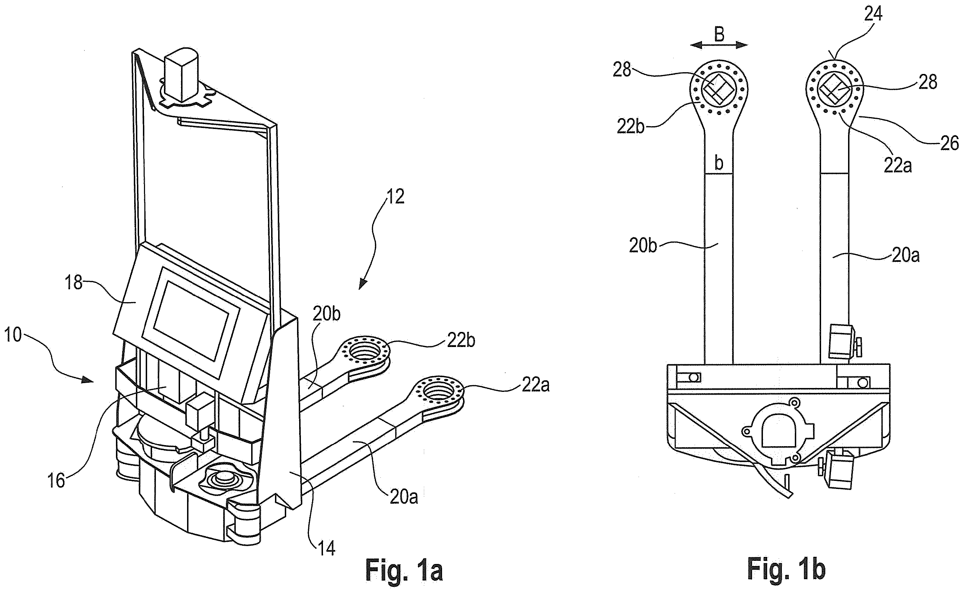

Figur 1a zeigt ein autonom fahrendes Flurförderzeug in einer perspektivischen Ansicht vom Antriebsteil her. Das Fahrzeug besitzt ein Antriebsteil 10 und ein Lastteil 12. Der Lastteil 12 besitzt einen Rahmen 14, in dem ein Antriebsmotor 16 sowie eine Steuerung 18 mit einem Display angeordnet sind. Nicht zu erkennen in Figur 1a ist das Antriebsrad, das mittig unter dem Antriebsteil 10 angeordnet ist und für den Vortrieb des Flurförderzeugs angetrieben werden kann. Das Antriebsrad kann dabei gelenkt werden, also in seiner Richtung relativ zur Fahrzeuglängsrichtung ausgerichtet und gestellt werden. Der Lastteil 12 besitzt zwei Lastarme 20a, 20b, die jeweils einen Lastkopf 22a, 22b besitzen. Wie in Fig. 1b zu erkennen, besitzt jeder der Lastarmköpfe 22 einen nahezu kreisförmigen Abschnitt 24. Der rechteckige, längliche Lastarm geht hierfür unter einem sich nach außen hin erweiternden Abschnitt 26 in den runden Abschnitt 24 über. Die Breite B des Lastarmkopfs 22 ist hierbei größer als die Breite b der Lastarme 20.

Jeder der Lastarmköpfe 22 besitzt ein Lastrad 28, das aktiv durch eine Lenkeinheit um eine vertikale Achse gedreht werden kann. Dabei kann ein Lenkwinkel endlos eingestellt werden oder als auf ein Intervall von 0° bis 360° begrenzt angenommen werden, wobei unter Vernachlässigung der Fahrtrichtung ein Lenkwinkel von 0° bis 180° für die Steuerung des Fahrzeugs ausreicht.

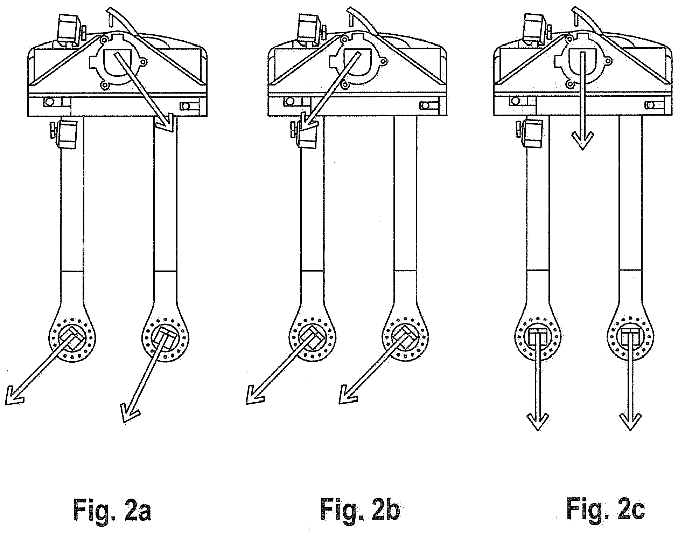

Durch die aktive Lenkung der Lasträder können verschiedene Fahrweisen für das Fahrzeug eingestellt werden. Figur 2c zeigt die gebräuchliche Fahrweise entlang der Fahrzeuglängsrichtung mit einer Geradeausfahrt. Fig. 2b zeigt einen sogenannten Hundegang, bei dem alle Räder den gleichen Lenkwinkel besitzen und sich das Fahrzeug somit quer zu seiner Längsrichtung bewegt. Figur 2a zeigt eine Fahrt entlang einer Trajektorie, bei der jedes der drei Räder einen individuell eingestellten Lenkwinkel besitzt. Eine solche Fahrt dient beispielsweise zur Korrektur von einem seitlichen Versatz und zur Korrektur von Winkelfehlern bei einer aufzunehmenden Last. Auch reduziert die Fahrt entlang einer Trajektorie erheblich den Wendekreis, insbesondere beim Einfahren in eine seitlich begrenzte Station.

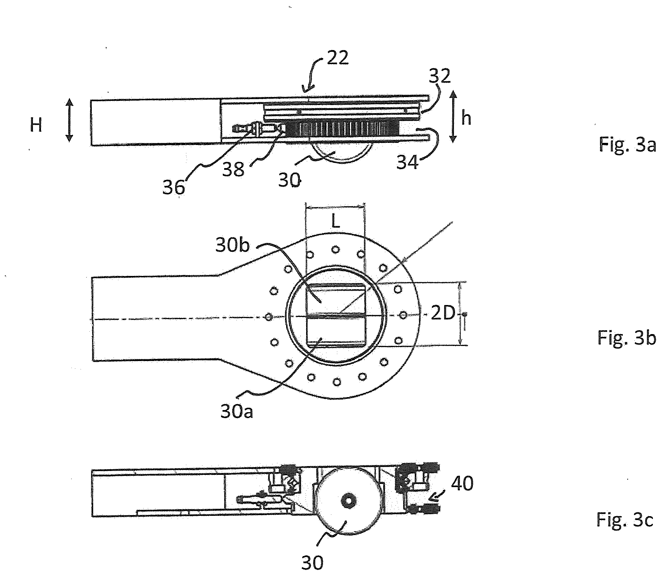

Fig. 3 zeigt den Lastarmkopf in einer Ansicht von der Seite. Der Lastarmkopf 22 besitzt ein Lastrad 30. Das Lastrad 30 kann auch als Lastrolle ausgebildet sein. Das Lastrad 30 ist in seinem Durchmesser so gewählt, dass es nach oben, also auf der die Last aufnehmenden Seite des Lastarms, nicht aus diesem heraussteht. Das Lastrad 30 steht lediglich auf der nach unten, zum Grund weisenden Seite des Lastarms aus diesem heraus. Das Lastrad 30 ist in einer Lagereinheit 32 gelagert und besitzt einen umlaufende Zahnung 34. Die Zahnung 34 besitzt Referenzmarken 38, die von einem Sensor 36 zur Erfassung des Lenkwinkels sensiert werden können. Bei der Verwendung von Referenzmarken 38 wird beispielsweise eine oder mehrere Referenzmarken sensiert und die Stellung bis zum nächsten Sensieren der Referenzmarke inkremental erfasst. Für das Stellen der Lagereinheit 32 können verschiedenste Antriebsmöglichkeiten vorgesehen sein. Beispielsweise ist es möglich, die Zahnung 34 zum Einstellen des Lenkwinkels zu nutzen. Ebenfalls ist es möglich, an der Lenkeinheit ein Riemen, beispielsweise einen Zahnriemen- oder ein Kettentrieb, vorzusehen. Auch eine Kugelumlaufspindel mit Hebel, ein Getriebe oder ein Elektro- oder ein Hydraulikzylinder könnten vorgesehen sein, um das Lastrad zu stellen.

Aus Figur 3b ist zu erkennen, dass zwei Lastrollen 30a, 30b vorgesehen sind, die sich unabhängig voneinander stellen lassen. Hierdurch werden beim Einstellen des Lenkwinkels der Verschleiß und die Kräfte auf die Räder bzw. Rollen verkleinert. Die Lastrollen 30a, 30b besitzen jeweils einen Durchmesser L und eine Breite D, so dass sich die Gesamtbreite 20 ergibt. Figur 3c zeigt einen Querschnitt durch den Lastkopf, der Bauraum für weitere Sensoren freilässt.

Durch den Wegfall eines Fahrantriebs für die Lasträder kann die Bauhöhe h des Lastarmkopfes der Bauhöhe H des Lastarms entsprechen.

**Bezugszeichenliste**

| | |
|---|---|
| Antriebsteil | 10 |
| Lastteil | 12 |
| Rahmen | 14 |
| Antriebsmotor | 16 |
| Steuerung | 18 |
| Lastarm | 20, 20a, 20b |
| Lastarmkopf | 22a, 22b |
| Kontur | 24 |
| erweiterter Abschnitt | 26 |
| Lastrad | 28, 30 |
| Lagereinheit | 32 |
| Zahnung | 34 |
| Sensor | 36 |

## Patentansprüche

1. Flurförderzeug, insbesondere ein autonom fahrendes Flurförderzeug, das mit einem mehrrädrigen Fahrwerk ausgestattet ist, das ein mit einer Antriebseinheit und einer Lenkeinheit ausgestattetes Antriebsrad und zwei nur mit jeweils einer Lenkeinheit ausgestattete Lasträder (28, 30) aufweist.

2. Flurförderzeug nach Anspruch 1, **dadurch gekennzeichnet, dass** ein Antriebsteil (10) und ein Lastteil (12) vorgesehen sind, wobei das Lastteil (12) ein Lastaufnahmemittel besitzt.

3. Flurförderzeug nach Anspruch 1 oder 2, **dadurch gekennzeichnet, dass** die zwei Lasträder (28, 30) jeweils an einem von dem Antriebsteil (10) fortweisenden Ende des Lastteils (12) angeordnet sind und deren jeweilige Lenkeinheit jeweils unabhängig voneinander angesteuert werden können.

4. Flurförderzeug nach einem der Ansprüche 1 bis 3, **dadurch gekennzeichnet, dass** die Lenkeinheit von jedem Lastrad (28, 30) dieses in einen gewünschten Lenkwinkel stellen kann.

5. Flurförderzeug nach einem der Ansprüche 2 bis 4, **dadurch gekennzeichnet, dass** das Lastaufnahmemittel zwei parallel zueinander verlaufende Lastarme (20, 20a, 20b) aufweist, die an ihrem Ende einen Lastarmkopf mit dem Lastrad (28, 30) aufweisen.

6. Flurförderzeug nach Anspruch 5, **dadurch gekennzeichnet, dass** der Lastarmkopf (22) einen runden Abschnitt (24) aufweist, der vorzugsweise in der Breite über den Lastarm (20) hinaussteht und in dem eine Lagereinheit (32) mit dem Lastrad (28, 30) angeordnet ist.

7. Flurförderzeug nach einem der Ansprüche 1 bis 6, **dadurch gekennzeichnet, dass** eine Lagereinheit drehbar in dem Lastarmkopf (22) angeordnet ist und die Lenkeinheit die Lagereinheit mit dem Lastrad (28, 30) aktiv dreht.

8. Flurförderzeug nach Anspruch 7, **dadurch gekennzeichnet, dass** die Lagereinheit einen vollständig oder teilweise umlaufenden Zahnkranz aufweist, in den die Lenkeinheit eingreift.

9. Flurförderzeug nach einem der Ansprüche 1 bis 8, **dadurch gekennzeichnet, dass** jedes der Lasträder (28, 30) einen Sensor aufweist, der den Lenkwinkel des Lastrades mindestens zum Zwecke der Referenzierung erfasst.

10. Flurförderzeug nach einem der Ansprüche 1 bis 9, **dadurch gekennzeichnet, dass** die Lastrolle in geteilter Ausführung vorliegt.

11. Flurförderzeug nach Anspruch 10, **dadurch gekennzeichnet, dass** jede Teilrolle der geteilten Lastrolle als eine unabhängig gelagerte Teilrolle ausgebildet ist.
